# FASCICULE DE BREVET EUROPEEN

(11) **EP 2 927 647 B1**
(45) Date de publication et mention de la délivrance du brevet: **01.08.2018**
(21) Numéro de dépôt: 15305490.3
(22) Date de dépôt: 02.04.2015
(51) Int. Cl.: G01D 5/353, G01D 5/26, G01D 5/30, F21V 8/00, F16C 41/00, F16C 29/06

(54) **INSTALLATION DE GUIDAGE LINEAIRE INSTRUMENTEE**
MIT INSTRUMENTEN AUSGESTATTETE LINEARFÜHRUNGSANLAGE
INSTRUMENTED LINEAR GUIDING DEVICE

(30) Priorité: 04.04.2014 FR 1453001; 06.10.2014 FR 1459574
(43) Date de publication de la demande: 07.10.2015
(73) Titulaire: NTN-SNR Roulements, 74010 Annecy (FR)
(72) Inventeur: BEL, Pierre, 74540 Alby Sur Cheran (FR); DUET, Christophe, 74290 Bluffy (FR); FLAMIER; Cécile, 74000 Annecy (FR); LINDEMANN, Ralf, 32429 Minden (DE); MATHIEU, Jérome, 74960 Cran-Gevrier (FR); VANDAMME, Etienne, 74600 Seynod (FR)
(74) Mandataire: Alatis

(56) Documents cités:
- EP-A1- 1 956 705
- WO-A1-97/27026
- CA-A1- 2 422 341
- DE-A1-102006 056 803
- GB-A- 2 184 539
- US-A- 5 509 505
- US-A- 5 789 892
- US-A- 5 945 824
- US-B1- 6 333 628
- US-B1- 6 965 709
- LAGUESSE M F: "OPTICAL POTENTIOMETER USING FLUORESCENT OPTICAL FIBER FOR POSITION MEASUREMENT", APPLIED OPTICS, OPTICAL SOCIETY OF AMERICA, WASHINGTON, DC; US, vol. 28, no. 23, 1 décembre 1989 (1989-12-01), pages 5144-5148, XP000081093, ISSN: 0003-6935, DOI: 10.1364/AO.28.005144

## Description

### DOMAINE TECHNIQUE DE L'INVENTION

L'invention se rapporte à une installation de guidage linéaire comportant un rail de guidage et un équipage mobile cheminant le long du rail de guidage, le cas échéant entraîné par des moyens d'entraînement dont une partie est fixe par rapport au rail de guidage et une autre est solidaire de l'équipage mobile. On rencontre ce type d'installation dans l'industrie, notamment pour des applications à l'automatisation de la production notamment pour l'usinage, l'assemblage, la mesure ou la manutention.

### ÉTAT DE LA TECHNIQUE ANTÉRIEURE

Les chariots mobiles des installations de guidage linéaire de l'état de la technique sont souvent équipés de circuits électroniques pouvant avoir diverses fonctions, par exemple de mesure ou de transmission d'information, voire de commande et d'alimentation électrique d'équipements embarqués sur ces chariots. On utilise alors généralement pour alimenter électriquement ces circuits électroniques et échanger de l'information avec un poste de commande distant, des câbles qui nécessitent des systèmes de guidage. De tels câbles, les systèmes de guidage et la connectique associée sont sources de pannes, par exemple par fatigue et rupture.

Dans le document DE 199 55 038 est décrite une installation de guidage linéaire instrumentée avec un rail de guidage stationnaire équipé sur une face supérieure d'une bande magnétique, et un chariot mobile sur le rail de guidage, et équipé d'un capteur situé en regard de la bande magnétique. Pour relier le capteur à une station de mesure stationnaire, l'installation est équipée d'une liaison filaire constituée par un câble souple entre le chariot et la station de mesure.

Dans le document CA2422341 est décrite une installation de guidage linéaire instrumentée comportant un châssis stationnaire sur lequel sont montés deux rails parallèles, et un chariot mobile sur les rails de guidage par l'intermédiaire de roulements à billes. Le châssis stationnaire porte des aimants permanents et le chariot mobile porte des enroulements, de façon à réaliser un moteur linéaire. Les deux rails sont isolés électriquement du châssis stationnaire et connectés à une alimentation électrique. Les enroulements du chariot mobile sont reliés électriquement aux rails par les roulements à billes, de manière à établir un circuit électrique d'alimentation des enroulements. Le chariot mobile porte par ailleurs des capteurs à effet Hall pour générer des signaux de commutation indiquant la position des enroulements par rapport aux aimants permanents. Le chariot mobile comporte également un capteur de position, par exemple optique, lisant une information de position sur le stator.

Dans le document US 6 965 709 est divulgué un dispositif de mesure de position faisant appel à une fibre photoluminescente excitée par une source modulée. L'atténuation du signal réémis par la fibre photoluminescente depuis le point d'émission le long de la fibre permet de déterminer la distance entre le point d'excitation et un récepteur photosensible situé à l'extrémité de la fibre. La source modulée est guidée le long de la trajectoire définie par la fibre photoluminescente par des moyens de guidage génériques non décrits en détail.

Dans le document EP 1 956 705 est décrite une installation de guidage linéaire instrumentée, comportant un rail de guidage sur lequel sont formées au moins deux pistes de guidage, au moins un équipage mobile guidé sur les pistes de guidage du rail de guidage, notamment par contact roulant ou glissant le long d'une trajectoire prédéterminée fixe par rapport au rail de guidage, le rail de guidage présentant quatre faces principales, incluant une face supérieure et une face inférieure opposées, et deux faces latérales opposées s'étendant chacune entre la face supérieure et la face inférieure pour les relier l'une à l'autre, l'équipage mobile comportant un circuit électronique. L'installation de guidage comporte en outre un dispositif d'alimentation en énergie du circuit électronique, incluant un distributeur d'énergie solidaire du rail de guidage et un collecteur d'énergie solidaire de l'équipage mobile, apte à collecter de l'énergie mise à disposition par le distributeur d'énergie pour alimenter le circuit électronique. L'installation de guidage comporte en outre un dispositif indicateur de position incluant un codeur de position linéaire longeant la trajectoire de l'équipage mobile, et au moins un capteur de position solidaire de l'équipage mobile, relié au circuit électronique et lisant au moins une information sur le codeur de position linéaire. L'installation de guidage comporte en outre un émetteur-récepteur à radiofréquences solidaire de l'équipage mobile et relié au circuit électronique, cet émetteur-récepteur permettant une communication montante par radiofréquences depuis une unité de commande située à distance du rail vers le circuit électronique et une communication descendante du circuit électronique à l'unité de commande.

### EXPOSÉ DE L'INVENTION

L'invention vise à remédier aux inconvénients de l'état de la technique. Pour ce faire est proposé, selon un premier aspect de l'invention, une installation de guidage linéaire instrumentée comportant un rail de guidage sur lequel sont formées au moins deux pistes de guidage, au moins un équipage mobile guidé sur les pistes de guidage du rail de guidage, notamment par contact roulant ou glissant le long d'une trajectoire prédéterminée fixe par rapport au rail de guidage, l'équipage mobile comportant un circuit électronique, l'installation comportant au moins deux des quatre dispositifs d'instrumentation suivants, comportant chacun une partie stationnaire solidaire du rail de guidage et une partie mobile solidaire de l'équipage mobile :
- un dispositif d'alimentation en énergie du circuit électronique, incluant un distributeur d'énergie solidaire du rail de guidage et un collecteur d'énergie solidaire de l'équipage mobile, apte à collecter de l'énergie mise à disposition par le distributeur d'énergie pour alimenter le circuit électronique ;
- un dispositif indicateur de position incluant un codeur de position linéaire solidaire du rail de guidage longeant la trajectoire de l'équipage mobile, et au moins un capteur de position solidaire de l'équipage mobile, relié au circuit électronique et lisant au moins une information sur le codeur de position linéaire;
- un dispositif de transmission d'informations descendantes comportant un émetteur descendant solidaire de l'équipage mobile et relié au circuit électronique, apte à coopérer avec un support linéaire de réception descendante solidaire du rail de guidage, positionné le long de la trajectoire;
- un dispositif de transmission d'informations montantes comportant un support linéaire d'émission montante solidaire du rail de guidage, positionné le long de la trajectoire, apte à coopérer avec un récepteur montant solidaire de l'équipage mobile et relié au circuit électronique.

Suivant l'invention, l'installation de guidage linéaire instrumentée comporte au moins le dispositif de transmission d'informations descendantes et le dispositif indicateur de position. De plus, le support linéaire de réception descendante est disposé dans une gorge du rail de guidage.

Grâce à l'invention, on intègre au rail de guidage lui-même les parties stationnaires de plusieurs dispositifs d'instrumentation, ce qui réduit, voire élimine totalement le besoin en câbles de liaison électrique entre l'équipage mobile et la partie stationnaire de l'installation. L'installation est donc de préférence dépourvue de liaison filaire entre l'équipage mobile et la partie stationnaire de l'installation, et en particulier entre l'équipage mobile et les parties stationnaires des dispositifs d'instrumentation.

Suivant un mode de réalisation préféré, le rail de guidage présente quatre faces principales, incluant une face supérieure et une face inférieure opposées, et deux faces latérales opposées s'étendant chacune entre la face supérieure et la face inférieure pour les relier l'une à l'autre. Ce type de rail de guidage correspond aux standards industriels les plus fréquents. Le rail de guidage peut être de section générale rectangulaire ou carrée. Chacune des faces principales peut présenter des découpes formant des rainures parallèles à la trajectoire. Le rail de guidage peut être en aluminium ou en acier, ou tout autre matériau assurant une bonne rigidité pour la fonction de guidage. La trajectoire peut être curviligne, mais sera dans la plupart des applications rectiligne.

De préférence, la partie stationnaire d'un premier des au moins deux dispositifs d'instrumentation est positionnée sur l'une première des quatre faces principales du rail de guidage, la partie stationnaire d'un autre des au moins deux dispositifs d'instrumentation étant positionnée sur une autre des quatre faces principales du rail de guidage. On a ainsi une plus grande liberté de positionnement des différents dispositifs d'instrumentation, à la fois sur le rail de guidage et sur l'équipage mobile.

Suivant un mode de réalisation, l'installation comporte au moins un troisième des au moins deux dispositifs d'instrumentation, disposé sur la première ou la deuxième des quatre faces principales. Alternativement, le troisième des au moins deux dispositifs d'instrumentation peut être disposé sur une troisième des quatre faces principales, distincte de la première et de la deuxième des quatre faces principales.

Suivant un mode de réalisation, la première des quatre faces principales et la deuxième des quatre faces principales incluent une des faces supérieure et inférieure et une des faces latérales Alternativement, il peut s'agir de deux faces parallèles, de préférence les deux faces latérales.

Suivant un mode de réalisation, les au moins deux pistes de guidages comprennent au moins une piste de guidage localisée au niveau d'une arête entre au moins une des faces latérales et au moins une des faces supérieure et inférieure. Il pourra notamment s'agir d'une arête entre l'une des faces latérales et la face supérieure du rail de guidage.

Suivant un mode de réalisation, l'équipage mobile est entraîné par un dispositif d'entraînement de l'installation, qui peut comporter un moteur comportant un stator fixe en rotation par rapport au rail de guidage. De préférence, le moteur comporte un rotor tournant par rapport au rail de guidage, le dispositif d'entraînement comportant une chaîne cinématique de transmission pour transformer une rotation du rotor en un mouvement de l'équipage mobile par rapport au rail de guidage.

De préférence, l'équipage mobile est un chariot roulant en va-et-vient sur les pistes de guidage.

Le capteur de position peut notamment être un capteur magnétique, et de préférence un capteur incluant un élément magnétorésistant à effet tunnel, ce type de capteur ayant une consommation électrique très faible. De préférence, l'installation comporte au moins le dispositif indicateur de position et le dispositif de transmission descendante et le circuit électronique comporte un module de positionnement pour lire un signal de position généré par le capteur de position et un module de commande pour commander l'émetteur descendant de manière à émettre un signal descendant contenant une information de position fonction du signal de position.

L'alimentation électrique du circuit électronique peut se faire par tout moyen approprié, notamment par pile ou batterie rechargeable embarquée sur l'équipage mobile, ou par prélèvement d'énergie sur le premier équipage mobile en mouvement (vibration d'un quartz piézoélectrique ou d'une cellule à induction excitée par le mouvement de l'équipage mobile, générateur linéaire utilisant un enroulement se déplaçant face à une piste placée le long de la voie de guidage et constituée de pôles magnétiques alternés...).

Suivant un mode de réalisation préféré, le distributeur d'énergie comporte au moins deux pistes d'alimentation électrique disposées le long de la première voie de guidage et le collecteur d'énergie comporte au moins deux contacts électriques mobiles d'alimentation, reliés chacun électriquement au circuit électronique et assurant chacun un contact électrique avec l'une des piste pistes d'alimentation électrique. On peut ainsi avoir une alimentation électrique permanente, ou du moins à volonté, même à l'arrêt à partir d'une source d'énergie non embarquée.

Suivant un mode de réalisation particulièrement avantageux, l'installation comporte au moins le dispositif indicateur de position et le dispositif d'alimentation électrique, et le codeur du dispositif indicateur de position est constitué par un codeur magnétique recouvert par une bande métallique de protection constituant l'une des pistes d'alimentation électrique du distributeur d'énergie.

Une au moins des pistes d'alimentation électrique du distributeur d'énergie est isolée du rail de guidage. L'autre piste d'alimentation électrique peut également être isolée du rail de guidage, ou au contraire être constituée par une surface du rail de guidage, en contact de laquelle vient le contact électrique correspondant de l'équipage mobile.

Suivant un mode de réalisation particulièrement avantageux, le rail de guidage est équipé d'au moins un enroulement primaire d'alimentation électrique disposé de manière à induire un courant électrique dans au moins un enroulement secondaire disposé sur l'équipage mobile et relié au circuit électronique. Le ou les enroulements primaires sont disposés sur la voie de guidage de manière à générer des variations de flux magnétique dans l'enroulement secondaire quelle que soit la position de l'équipage mobile.

L'installation peut être à un degré de liberté seulement, avec par exemple un rail de guidage fixe rectiligne ou curviligne. Alternativement, il peut s'agir d'une installation à plusieurs degrés de liberté. Ainsi, l'installation peut comporter au moins un deuxième rail de guidage solidaire du premier équipage mobile, et au moins un deuxième équipage mobile guidé le long du deuxième rail de guidage.

L'intégration du support linéaire de réception descendante au rail de guidage peut avantageusement inclure une ou plusieurs des caractéristiques suivantes:
- le support linéaire de réception descendante, est recouvert d'une couche de résine ;
- l'équipage mobile, est pourvu d'au moins un système de nettoyage du support linéaire de réception descendante,.

L'intégration de l'émetteur descendant à l'équipage mobile peut avantageusement inclure une ou plusieurs des caractéristiques suivantes:
- l'émetteur descendant est monté en surface d'une plaque de circuit imprimé du circuit électronique ou traversant une plaque de circuit imprimé du circuit électronique ;
- l'émetteur descendant, est positionné latéralement à distance du support linéaire de réception descendante,.

Suivant un mode de réalisation particulièrement avantageux, le support linéaire de réception descendante comporte une fibre optique photoluminescente positionnée le long de la trajectoire, l'émetteur descendant comportant une source lumineuse d'excitation solidaire de l'équipage mobile pour illuminer transversalement la fibre optique photoluminescente, le dispositif de transmission d'informations descendantes comportant en outre au moins une cellule photosensible formant le récepteur et située à au moins une extrémité de la fibre optique.

Le dispositif comporte de préférence un circuit pour commander la source lumineuse d'excitation et produire un signal lumineux d'excitation dont l'amplitude est modulée.

La cellule photosensible est de préférence une cellule photoélectrique, et le dispositif comporte de préférence également un circuit de réception capable d'amplifier et de filtrer le signal lumineux réceptionné par la cellule photosensible et un circuit de décision et de décodage capable de reconstruire les données utiles.

La fibre électroluminescente est de préférence chargée de particules fluorescentes. En effet, le temps de réponse extrêmement rapide du phénomène de fluorescence est avantageux, notamment par rapport à la phosphorescence.

De préférence, on fait en sorte que la source lumineuse d'excitation soit positionnée latéralement à distance de la fibre optique photoluminescente. La distance entre la source lumineuse d'excitation et la fibre optique n'a pas à être déterminée précisément, sous réserve que le faisceau lumineux d'excitation soit judicieusement focalisé, celle-ci peut le cas échéant varier sans que la transmission d'informations en soit perturbée, ce qui est un des avantages de la solution proposée.

On a intérêt à ce qu'une partie substantielle du signal lumineux d'excitation en provenance de la source lumineuse frappe la fibre perpendiculairement à une de ces faces latérales, ce qui favorise une bonne absorption du rayonnement d'excitation, celle-ci étant une fonction monotone de la longueur du faisceau lumineux traversant la fibre. La fibre optique électroluminescente peut avoir une section circulaire ou polygonale, notamment rectangulaire. Une section avec une face plane peut être avantageuse pour optimiser la pénétration de la lumière d'excitation incidente dans la fibre optique électroluminescente, mais ceci seulement si on a des garanties suffisantes sur le positionnement de la source lumineuse d'excitation en face de cette face plane. Dans d'autres circonstances, et notamment lorsque le positionnement de la source lumineuse d'excitation est difficile à maîtriser, on pourra préférer une fibre optique électroluminescente de section circulaire.

Suivant un mode de réalisation particulièrement avantageux, la fibre optique photoluminescente est disposée dans une gorge présentant une ou plusieurs parois réfléchissantes, qui peuvent être concaves ou à section polygonale. La forme de la gorge contenant la fibre améliore l'efficacité de la conversion entre le signal incident et le signal réémis. En effet, les parois latérales et arrière de la gorge réfléchissent la lumière n'ayant pas rencontré la fibre ou non encore absorbée par la fibre. Cette lumière réfléchie peut traverser à nouveau la fibre et exciter le phénomène de photoluminescence. L'amplitude récupérée en bout de fibre est alors plus importante. En pratique, la gorge pourra être formée par exemple dans un rail de guidage métallique constituant le cas échéant la voie de guidage, et dont les parois sont suffisamment réfléchissantes ou traitées pour l'effet recherché.

Pour protéger la première fibre optique photoluminescente des agressions physiques et chimiques, on peut avantageusement la recouvrir d'une couche de résine. Dans le cas d'une fibre optique photoluminescente logée dans une gorge, la couche de résine ferme la gorge. La résine peut le cas échéant entourer totalement la fibre optique photoluminescente et remplir la gorge. La résine sera choisie pour sa faible absorbance à la longueur d'onde utile (par exemple à 400 nm environ), pour sa bonne adhérence avec la fibre et avec le matériau constituant les parois de la gorge, pour sa bonne résistance thermique et chimique (à la graisse, à l'huile de coupe, etc), pour sa dureté de surface et sa lipophilie. On pourra choisir notamment une résine référencée Dymax® 4-20418 / 4-20632. La dureté et la lipophilie pourront le cas échéant être obtenus par un additif à la résine ou par un traitement de surface, par exemple un dépôt de parylène. La résine pourra le cas échéant être réticulable par exposition à un rayonnement ultraviolet, ce qui permet d'envisager un procédé de fabrication dans lequel la fibre est insérée dans la gorge, puis le volume de la gorge non occupé par la fibre est rempli de résine non réticulée. La surface supérieure de résine est ensuite lissée avec un racleur avant exposition à un rayonnement ultraviolet pour obtenir la réticulation.

On peut avantageusement prévoir que l'équipage mobile soit équipé d'au moins un système de nettoyage de la fibre optique. Il peut être constitué par exemple d'un joint qui vient frotter sur la surface où la lumière pénètre pour atteindre la fibre ou au contraire d'un racloir qui en se déplaçant à très faible distance de la dite surface diminue de manière drastique l'épaisseur de lubrifiant se situant éventuellement en cet endroit.

Le circuit électronique est de préférence apte à commander la source lumineuse d'excitation et produire le signal lumineux d'excitation, de préférence sous forme d'un signal lumineux numérique. L'installation est particulièrement adaptée à la transmission de signaux numériques. On prendra ainsi soin de choisir une technique de modulation, de préférence numérique, et un codage garantissant un équilibre des motifs transmis. Par exemple une modulation directe d'intensité associée à un codage Manchester ou 8b/10b est adaptée. On pourra judicieusement associer un code de détection et de correction d'erreur afin d'augmenter la fiabilité de la communication. Le facteur limitant pour la bande passante est le temps de rémanence de l'effet électroluminescent, qui peut être faible en choisissant de façon judicieuse les pigments utilisés.

### BRÈVE DESCRIPTION DES FIGURES

D'autres caractéristiques et avantages de l'invention ressortiront à la lecture de la description qui suit, en référence aux figures annexées, qui illustrent:
- la figure 1 une vue schématique isométrique d'une installation selon un premier mode de réalisation de l'invention;
- la figure 2, une vue schématique en coupe transversale d'un détail d'un rail de guidage instrumenté de l'installation de la figure 1, et d'un module électronique coopérant avec ce rail de guidage instrumenté;
- la figure 3, une vue schématique d'un circuit électronique du module électronique de la figure 2, utilisé dans les différents modes de réalisation de l'invention;
- la figure 4, une vue schématique d'une première variante du rail de guidage instrumenté et du module électronique, selon un mode alternatif de réalisation de l'invention;
- la figure 5, une vue schématique d'une deuxième variante du rail de guidage instrumenté et du module électronique un mode alternatif de réalisation de l'invention;
- la figure 6, une vue schématique d'une troisième variante du rail de guidage instrumenté et du module électronique selon un mode alternatif de réalisation de l'invention;
- la figure 7, une vue schématique d'une partie de l'installation de la figure 1;
- la figure 8, une vue schématique en coupe transversale d'un détail d'implantation d'une fibre optique électroluminescente dans une gorge de logement d'un rail de guidage instrumenté selon l'une des figures 2, 4, 5 ou 6, suivant un premier mode de réalisation;
- la figure 9, une vue schématique en coupe transversale d'un détail d'implantation d'une fibre optique électroluminescente dans une gorge de logement d'un rail de guidage instrumenté selon l'une des figures 2, 4, 5 ou 6, suivant un deuxième mode de réalisation;
- la figure 10, une vue schématique en coupe transversale d'un détail d'implantation d'une fibre optique électroluminescente dans une gorge de logement d'un rail de guidage instrumenté selon l'une des figures 2, 4, 5 ou 6, suivant un troisième mode de réalisation;
- la figure 11, une vue schématique en coupe transversale d'une diode électroluminescente disposée sur un équipage mobile en regard d'une fibre optique logée dans une gorge d'un rail de guidage, suivant un quatrième mode de réalisation de l'invention;
- la figure 12, une vue schématique en coupe transversale d'une diode électroluminescente disposée sur un équipage mobile en regard d'une fibre optique logée dans une gorge d'un rail de guidage, suivant un cinquième mode de réalisation de l'invention;
- la figure 13, une vue schématique en coupe transversale d'un détail d'un rail de guidage de l'installation de la figure 1, pourvue d'une gorge de logement d'une fibre optique électroluminescente recouverte d'une couche de protection, suivant un sixième mode de réalisation de l'invention;
- la figure 14, une vue schématique en coupe transversale d'un détail d'un rail de guidage de l'installation de la figure 1, pourvue d'une gorge de logement d'une fibre optique électroluminescente recouverte d'une couche de protection, suivant un septième mode de réalisation de l'invention;
- la figure 15, une vue schématique en coupe transversale d'un détail d'un rail de guidage de l'installation de la figure 1, pourvue d'une gorge de logement d'une fibre optique électroluminescente recouverte d'une couche de protection, suivant un huitième mode de réalisation de l'invention;
- la figure 16, une vue schématique d'une installation à deux axes selon un autre mode de réalisation de l'invention;
- la figure 17, une vue schématique d'un circuit électronique embarqué sur un équipage mobile de l'installation de la figure 16;
- la figure 18, une variante du rail de guidage instrumenté de la figure 2;
- la figure 19, une variante du rail de guidage instrumenté de la figure 4;
- la figure 20, une variante du rail de guidage instrumenté de la figure 5;
- la figure 21, une variante du rail de guidage instrumenté de la figure 6.

Pour plus de clarté, les éléments identiques ou similaires sont repérés par des signes de référence identiques sur l'ensemble des figures.

### DESCRIPTION DÉTAILLÉE DE MODES DE RÉALISATION

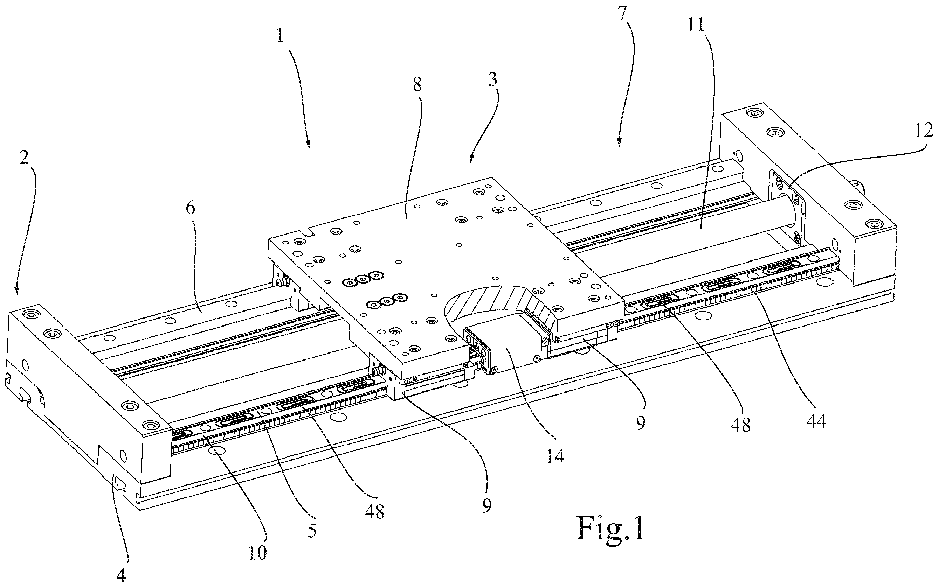

Sur la figure **1** est illustrée une installation de guidage linéaire **1** comportant une partie fixe **2** et un équipage mobile **3.** La partie fixe **2** est composée d'un bâti **4** sur lequel sont fixés deux rails de guidage parallèles **5, 6,** qui dans l'exemple sont rectilignes mais pourrait être curvilignes et forment ensemble une voie de guidage **7** pour l'équipage mobile **3.** Ce dernier constitue un chariot comportant une plateforme **8** reposant sur quatre modules de guidage **9** qui intègrent des patins ou des corps roulants (non représentés) glissant ou roulant sur des pistes de guidage **10** matérialisées sur les rails de guidage. Le chariot **3** intègre un écrou à billes (non représenté) fixe en rotation, qui coopère avec une vis d'entraînement **11.** De façon connue en soi, la vis d'entraînement **11** est guidée en rotation par rapport au bâti **4** par l'intermédiaire de paliers **12,** et entraînée en rotation par un tout moyen approprié, par exemple un moteur (non représenté), de manière à entraîner l'équipage mobile **3** en translation en va-et-vient sur la voie de guidage **7.**

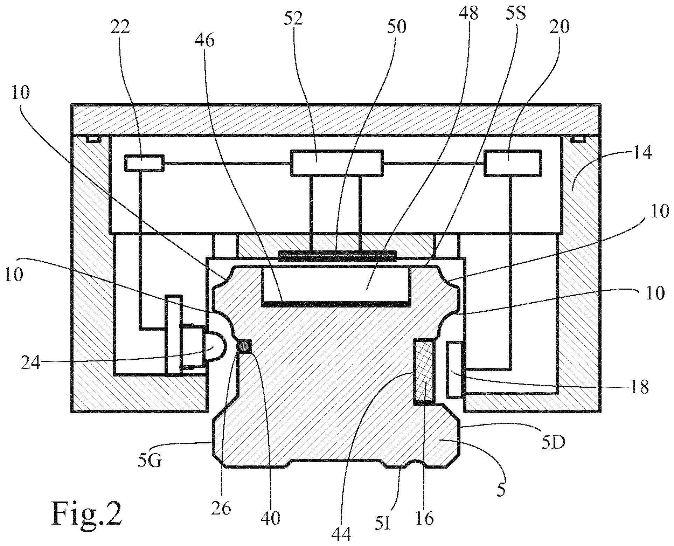

Comme illustré sur la figure **2****,** l'un au moins des deux rails de guidage **5, 6** est un rail de guidage instrumenté **5** constituant un support fonctionnel et structurel à divers dispositifs d'instrumentation et de transmission de signaux entre la partie fixe de l'installation et un module électronique **14** intégré à l'équipage mobile **3.** Dans la suite de l'exposé, on qualifiera de "montants" les signaux transmis de la partie fixe **2** à l'équipage mobile **3,** et par extension les moyens permettant ces transmissions, et de "descendants" les signaux transmis de l'équipage mobile **3** à la partie fixe **2** de l'installation **1** et les moyens permettant ces transmissions.

Le rail de guidage **5** présente en coupe transversale une section de forme générale rectangulaire, avec quatre faces principales: une face inférieure **5I** qui vient en appui plan contre le bâti **4,** une face supérieure **5S** opposée à la face inférieure **5I** et deux faces latérales **5D, 5G** s'étendant de la face inférieure **5I** à la face supérieure **5S.** Les pistes de guidages **10** sont ici au nombre de quatre, à savoir deux positionnées à l'intersection entre la face supérieure **5S** et chacune des faces latérales **5D, 5G,** et deux positionnées sur les faces latérales **5D, 5G.**

Sur la face latérale **5D** du rail de guidage **5** est ainsi disposé un codeur de position **16** lu par un capteur **18** embarqué sur le module électronique **14** de l'équipage mobile **3.** Le codeur de position **16** peut être un codeur magnétique comportant une ou plusieurs bandes présentant une succession de segments aimantés dont les directions de polarisation sont alternées. Alternativement, il peut s'agir d'une simple crémaillère en matériau ferromagnétique, dont la succession de dents et de creux est détectée à distance par le capteur **18.** Le codeur peut également être un codeur optique présentant des graduations lues à distance par le capteur **18.**

Quel que soit le principe retenu pour la détection de la position du chariot par le capteur **18,** le signal produit par ce dernier fait l'objet d'un traitement par le module électronique **14,** et plus spécifiquement par un circuit de conditionnement du signal **20** relié à un circuit de commande **22** d'une source lumineuse d'excitation **24,** par exemple une diode électroluminescente, disposée en regard et à distance d'une fibre optique photoluminescente **26** disposée sur la face **5G** du rail de guidage **5,** le long du rail de guidage **5.** Le codeur de position linéaire **16** solidaire du rail de guidage **5** constitue ainsi avec le capteur de position **18** solidaire de l'équipage mobile **3,** relié au circuit électronique **53** un dispositif indicateur de position **100.** La source lumineuse d'excitation **24** constitue quant à elle un émetteur descendant et la fibre optique photoluminescente **26** un support linéaire de réception descendante d'un dispositif de transmission d'informations descendantes **200.**

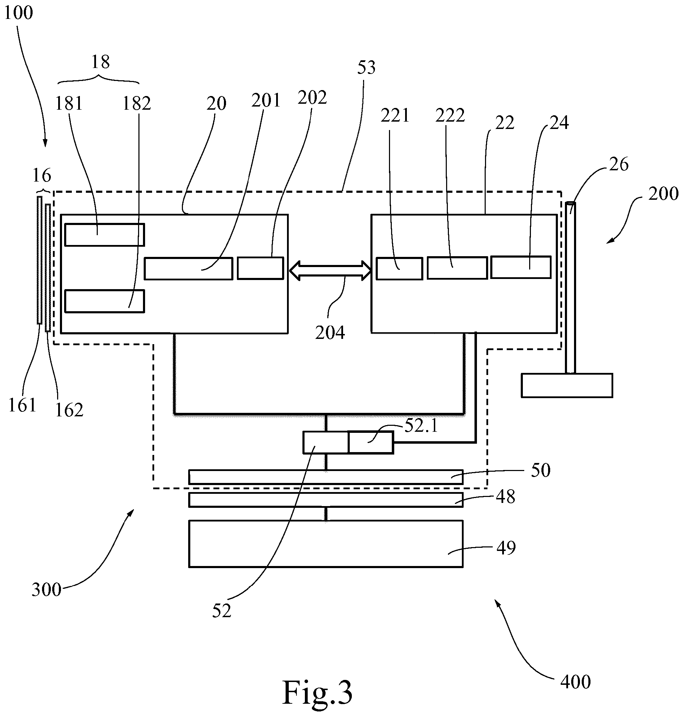

La face supérieure du rail de guidage est pourvue d'une gorge **46** de réception d'un circuit primaire **48** inductif plat à plusieurs enroulements qui fait face à un enroulement secondaire d'induit **50** du module électronique **14** solidaire du chariot **3.** Comme illustré sur la figure **3****,** le circuit primaire **48** est relié à une source de tension alternative **49** et l'enroulement secondaire est relié à un bloc d'alimentation **52** des circuits de conditionnement **20** et de commande **22.** Le positionnement relatif de l'enroulement secondaire **50** et de l'enroulement primaire **48** est tel que quel que soit le positionnement du chariot **3** sur le rail de guidage **5,** un courant primaire traversant l'enroulement primaire **48** induit un courant secondaire dans l'enroulement secondaire, propre à alimenter le bloc d'alimentation **52** et par son intermédiaire les circuits électroniques **20, 22** portés par le chariot **3.** Est ainsi constitué un dispositif d'alimentation en énergie **300** du module électronique **14,** incluant le circuit primaire constituant un distributeur d'énergie **48** solidaire du rail de guidage **5,** et l'enroulement secondaire **50** un collecteur d'énergie solidaire de l'équipage mobile **3,** apte à collecter de l'énergie mise à disposition par le distributeur d'énergie **48** pour alimenter le module électronique **14.**

On a illustré plus précisément sur la figure **3** un mode de réalisation de l'électronique embarquée sur l'équipage mobile **3.** Le capteur **18** comporte ici deux têtes de mesure **181, 182** comportant chacune de préférence un élément magnétorésitant à effet tunnel, et chacune dédiée à la lecture d'une piste **161, 162** du codeur **16,** ceci afin d'offrir une mesure de position absolue de haute résolution, après conditionnement des signaux par un module de conditionnement **201** et calcul par un microcontrôleur dédié **202.** La liaison entre le circuit de conditionnement **20** et le circuit de commande **22** de variation d'impédance de l'enroulement secondaire **24,** est réalisée par un bus synchrone **204.** Le circuit de commande **22** est lui-même pourvu d'un microcontrôleur qui communique avec le microcontrôleur **202** du circuit de conditionnement du signal **20** pour déterminer l'information de position à faire transiter par l'émetteur descendant **24** et la fibre optique photoluminescente **26.** Le microcontrôleur **221** commande un pilote **222** qui gère les signaux émis par l'émetteur descendant **24.** Les deux circuits **20, 22** sont alimentés par le circuit d'alimentation, relié au récepteur d'énergie **50** disposé en regard du circuit primaire **48.** Les deux circuits **20, 22** peuvent être matériellement distants l'un de l'autre et constituer deux modules distincts, ou être réunis sur une même carte électronique. Dans tous les cas, ils forment fonctionnellement un circuit électronique unique **53.**

On peut le cas échéant utiliser le circuit primaire **48** pour transmettre des signaux montants au circuit électronique **53.** Il suffit pour cela que la source de tension **49** soit modulée de manière à superposer au signal d'alimentation un signal contenant par exemple une information de commande. Cette information est transmise à l'enroulement d'induit **50** et lue par un circuit de réception **52.1** intégré au bloc d'alimentation **52,** pour être transmise au circuit de commande **22.** On constitue ainsi un dispositif de transmission d'informations montantes **400** comportant un support linéaire d'émission montante constitué par le circuit primaire **48** et un récepteur montant solidaire de l'équipage mobile constitué par l'enroulement d'induit **50.**

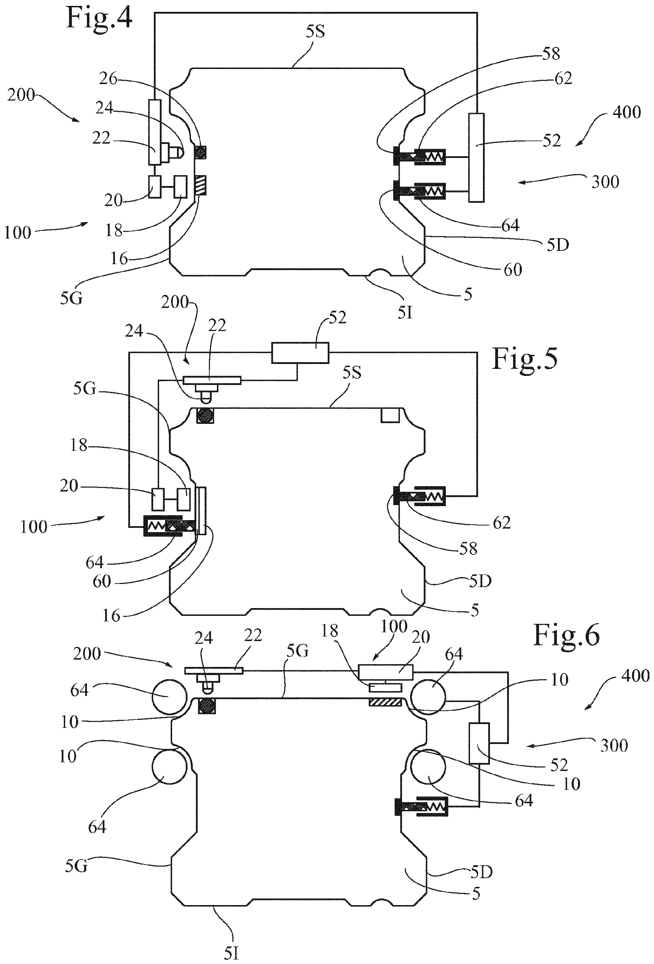

Alternativement, il est possible d'alimenter les circuits électroniques portés par le module électronique **14** du chariot **3** par des dispositifs à contacts glissant ou roulant sur des pistes de contact suivant la trajectoire guidée du chariot **3.** Sur la figure **4****,** on a illustré un rail de guidage **5** pourvu de deux gorges de logement de deux pistes de contact conductrices **58, 60.** Chaque piste **58, 60** est isolée du rail de guidage **5.** Le chariot **3** est quant à lui équipé de deux patins de contact **62, 64** reliés à un module d'alimentation **52** des circuits de conditionnement **20** et de commande **22.** On peut ainsi, en reliant les pistes conductrices **58, 60** à une source d'énergie électrique, alimenter le module d'alimentation **52** et, par son intermédiaire, les circuits électroniques **20, 22.**

Suivant une variante illustrée sur la figure **5****,** l'une des pistes de contact conductrices, en l'occurrence la piste **60,** est constituée par une couche métallique venant recouvrir le codeur **16** constitué par une bande magnétique pourvue d'une succession de pôles magnétiques alternés. La piste **60** a alors une double fonction de contact électrique et de protection mécanique et chimique de la bande magnétique du codeur **16.** Le cas échéant, la bande magnétique **16** peut être rendue solidaire de la piste métallique **60** par adhésion directe ou par l'intermédiaire d'un adhésif. Suivant la variante de la figure **6****,** le rail de guidage métallique **5** est utilisé pour constituer l'une des phases d'alimentation électrique de l'équipage mobile **3.** Plus spécifiquement, l'une des piste de contact est constituée par un chemin de roulement **60,** la continuité électrique entre le chemin de roulement et le module d'alimentation électrique **52** étant assurée par des corps roulants **64** qui assurent simultanément le guidage du chariot **3** sur le rail de guidage **5.** Naturellement, d'autres variantes sont possibles. Pour l'ensemble de ces variantes, on peut le cas échéant également utiliser le circuit d'alimentation pour transmettre des signaux montants au circuit électronique **53.** Il suffit pour cela que les pistes conductrices **58, 60** soit reliée à une source d'énergie modulée de manière à superposer au signal de puissance un signal montant porteur d'information, sous forme numérique ou analogique. Cette information est lue par un circuit de réception intégré au bloc d'alimentation **52,** pour être transmise au circuit de commande **22.** Les pistes conductrices **58, 60** et le module d'alimentation **52** et font de ce fait partie intégrante d'un dispositif de transmission d'informations montantes **400.**

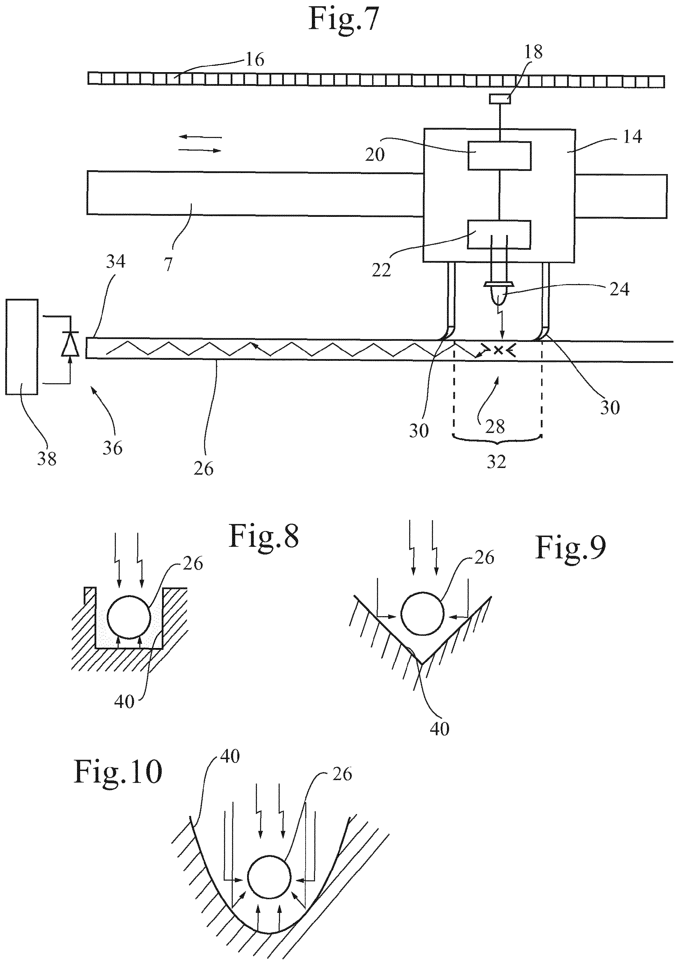

Dans l'ensemble des modes de réalisation des figures **1** à **6****,** la fibre optique est dopée de pigments fluorescents **28** dont la densité est de préférence constante le long de la fibre **26.** Comme illustré sur la figure **7****,** l'équipage mobile **3** est pourvu de frotteurs **30** en contact avec la fibre optique et situés, par rapport à la direction de la trajectoire, de part et d'autre de la source lumineuse d'excitation **24,** de manière à ce que la portion **32** de la fibre optique **26** en regard de la source lumineuse **24** soit propre.

À une extrémité **34** de la fibre optique photoluminescente **26** est positionnée une cellule photoélectrique **36** de réception reliée à un circuit électrique de réception **38.**

L'installation **1** fonctionne de la manière suivante. Lors de mouvement de l'équipage mobile **3,** l'information de position lue par le capteur **18** et conditionnée par le circuit de conditionnement **20** donne lieu à l'émission, par la source lumineuse **24** contrôlée par le circuit de commande **22,** d'un signal lumineux numérique qui, quelle que soit la position de l'équipage mobile **3** le long de la voie **7,** illumine une portion **32** de la fibre optique **26** située à ce moment en regard de la source lumineuse **24.**

Le signal lumineux radial incident en provenance de la source lumineuse **24** pénètre dans la fibre optique **26** où il excite les pigments fluorescents **28** à l'intérieur de la fibre **26.** Plus précisément, une partie des photons pénétrant dans la fibre **26** sont absorbés par les pigments fluorescents **28,** qui passent par un état électroniquement excité puis retournent rapidement à leur état fondamental en émettant un photon. Les photons émis transitent ensuite dans la fibre optique en étant réfléchis par les parois de la fibre, et sont ainsi guidés jusqu'à la cellule photoélectrique **36** qui les détecte, permettant un traitement ultérieur par le circuit électrique de détection **38.**

Le rendement de transmission entre l'émission par la source lumineuse d'excitation **24** du signal lumineux d'excitation et la lumière reçue par la cellule de réception photoélectrique **36** est très faible, et fonction de la pénétration du signal lumineux d'excitation dans la fibre **26,** de l'efficacité de l'effet fluorescent, de la fraction de la lumière réémise piégée effectivement dans la fibre mais également de l'atténuation du signal lumineux secondaire émis par les pigments, dans sa trajectoire le long de la fibre **26.** Les essais montrent toutefois que la réception reste possible sur des distances pouvant dépasser plusieurs mètres. La vitesse de transmission est rapide. La bande passante peut être limitée par le temps de réponse du phénomène fluorescent. À titre indicatif, on peut atteindre, en choisissant des pigments à faible rémanence, des bandes passantes de 20MHz, voire 60MHz, ce qui est parfaitement adapté à la transmission d'informations de position. Le décalage de longueur d'onde observé entre le signal d'excitation et le signal secondaire émis par la fibre photoluminescente propre au phénomène de fluorescence permet à la lumière émise par photoluminescence de ne pas être réabsorbée par la fibre.

Pour augmenter l'efficacité de la pénétration du signal lumineux d'excitation dans la fibre photoluminescente, on peut avantageusement placer la fibre photoluminescente **26** dans une gorge longitudinale **40** dont les parois sont réfléchissantes, comme illustré sur les coupes transversales des figures **8** à **10****.** Le profil de gorge **40** en U illustré sur la figure **8** permet à la lumière d'excitation qui a traversé la fibre photoluminescente **26** de se réfléchir au fond de la gorge pour être redirigée vers la fibre **26.** Le profil en V de la figure **9** permet à des rayons lumineux du signal d'excitation qui n'ont pas rencontré directement la fibre photoluminescente **26** d'être redirigés par réflexion vers cette dernière. Enfin, le profil parabolique de la figure **10** combine les deux effets précédents et permet de faire converger vers le foyer où se trouve la fibre **26** des rayons lumineux du signal incident qui n'ont pas rencontré directement la fibre **26,** et d'autres qui ont traversé la fibre.

On peut également, à l'aide du même dispositif, transmettre d'autres informations obtenues sur l'équipage mobile, relatives par exemple à l'état de charge d'une source d'énergie embarquée, à une température ou une autre variable d'état détectée par un capteur embarqué par l'équipage mobile, notamment une information de position provenant des dispositifs placé sur d'autres voies de guidage.

On peut le cas échéant prévoir une deuxième cellule photosensible disposée à l'autre extrémité de la fibre optique, reliée à un deuxième circuit de réception, ce qui peut permettre un fonctionnement même en cas de coupure de la fibre. On peut également doubler la longueur de la trajectoire définie par la voie en prévoyant deux dispositifs de mesure distincts, chacun avec une fibre optique couvrant au moins une des deux moitiés de la voie. Une zone de recouvrement peut être prévue entre les deux fibres optiques.

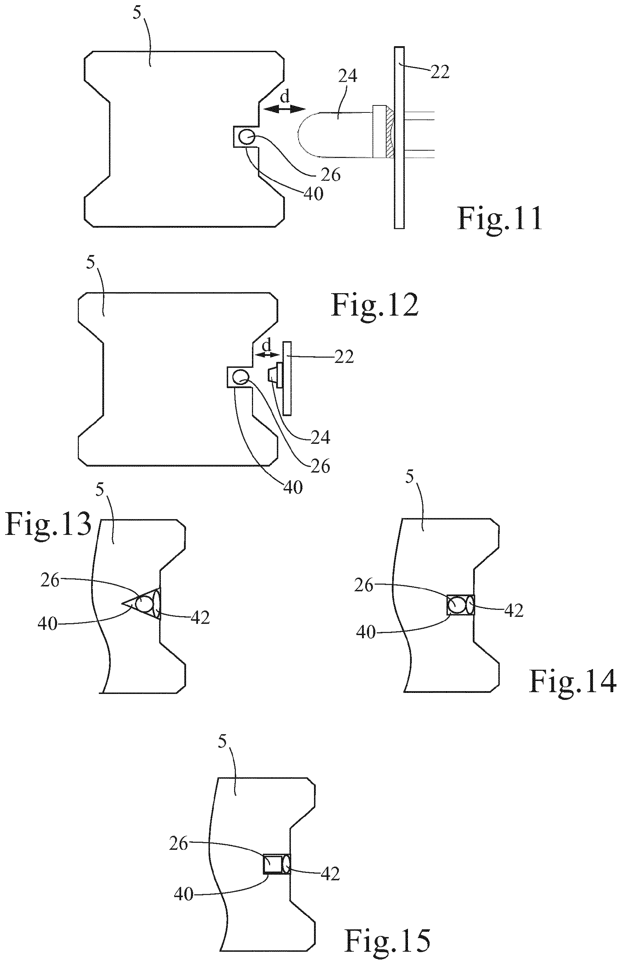

On a illustré sur la figure **11** un mode particulier de réalisation d'un rail de guidage **5** de l'installation **1** de la figure **1****,** dans lequel a été formé une gorge **40** de logement d'une fibre optique photoluminescente **26,** placée en regard d'une diode électroluminescente **24** montée au travers d'une plaque de circuit imprimé du circuit de commande **22** de la diode électroluminescente **24** et solidaire d'un chariot roulant non représenté. Sur la figure **12** est illustrée une variante de réalisation avec une diode électroluminescente **24** d'un type différent, positionné en surface d'une plaque de circuit imprimé **22** constituant le circuit de commande **22.**

Sur la figure **13** est illustré un rail de guidage **5** qui peut être utilisé pour l'installation **1** de la figure **1****,** et qui est pourvu d'une gorge **40** en biseau dans laquelle est logée une fibre optique photoluminescente de section circulaire **26.** De manière remarquable, un revêtement **42** en résine recouvre la fibre optique photuminescente **26** et refermer la gorge **40** en adhérant aux parois opposées de la gorge **40.** Pour ne pas entraver l'émission photonique secondaire, la résine utilisée présente une faible absorbance dans la gamme de longueur d'ondes de la diode électroluminesente **24** provoquant l'émission photonique secondaire par les pigments **28.** Le revêtement **40** participe au maintien de la fibre **26** dans la gorge **40** et à la protection chimique et mécanique de la fibre **26.** Sur la figure **14** est illustré un mode de réalisation ne se distinguant de celui de la figure **13** que par la section de la gorge **40,** qui présente deux parois opposées parallèles et planes, et une paroi de fond qui peut être plane comme illustrée, ou concave. Sur la figure **15** est illustrée une variante de réalisation qui ne diffère du mode de réalisation de la figure **14** que par la section de la fibre photoluminesente, qui est ici de section carrée ou rectangulaire. Dans cette hypothèse, le fond de la gorge **40** est de préférence plan et en contact surfacique avec la fibre **40.** Dans les modes de réalisation des figures **11** à **15****,** les faces de la gorge **40** sont de préférence traitées de manière à réfléchir la lumière.

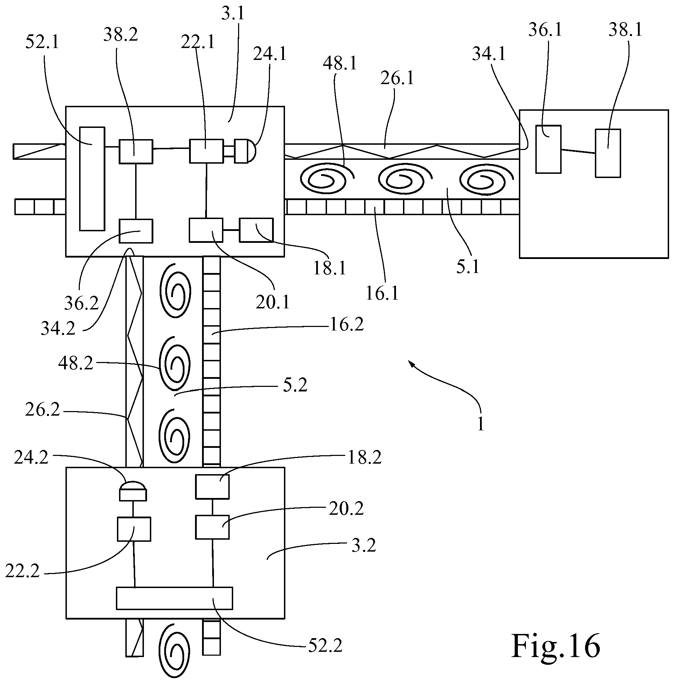

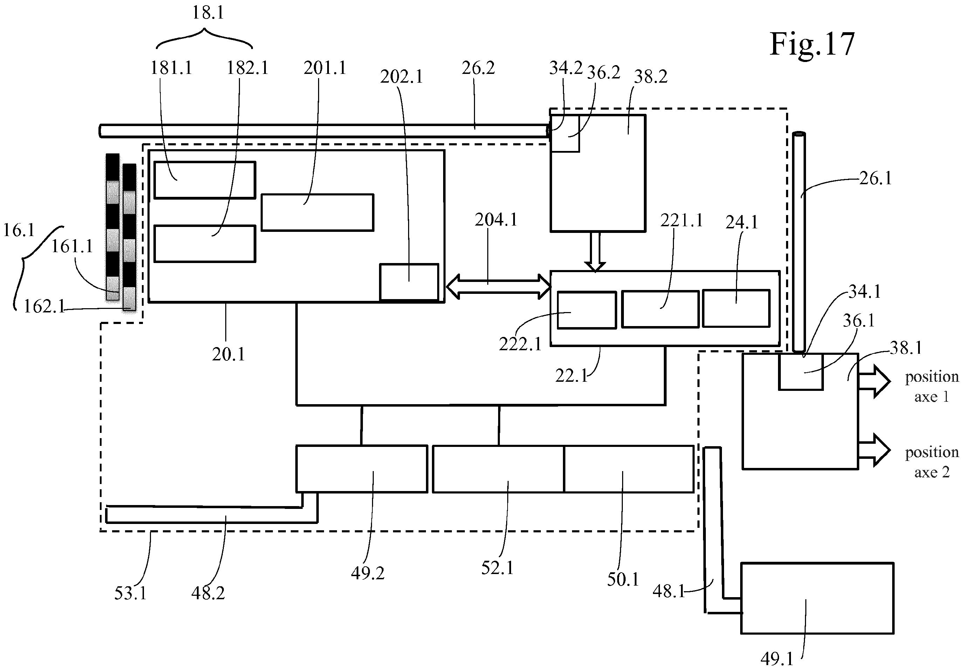

On a illustré sur les figures **16** et **17** une application de l'invention à une installation à deux axes perpendiculaires. Un premier rail de guidage instrumenté **5.1** assure le guidage rectilinéaire en va-et-vient d'un premier chariot **3.1,** qui porte un deuxième rail de guidage instrumenté **5.2** perpendiculaire au rail de guidage **5.1** et assurant le guidage rectilinéaire en va-et-vient d'un deuxième chariot **3.2.**

De la même manière que pour les systèmes monoaxiaux précédents, on peut mettre en oeuvre une transmission d'information descendante par une fibre optique photoluminescente **26.1** intégrée au premier rail de guidage **5.1,** fibre dont l'extrémité **34.1** est située en regard d'un récepteur **36.1** fixe par rapport au premier rail de guidage **5.1.** On peut également réaliser une transmission d'information par fibre optique photoluminescente entre le deuxième chariot **3.2** et le premier chariot **3.1.** Il suffit pour cela de prévoir une fibre optique photoluminescente **26.2** intégrée au rail de guidage **5.2** et cheminant le long du rail de guidage **5.2,** de préférence logé dans une gorge de logement prévue dans le rail de guidage **5.2,** dont l'extrémité **34.2** est positionnée en regard d'une cellule photoélectrique **36.2** reliée à un circuit de détection **38.2** embarqué par le premier chariot **3.1.**

Si l'on souhaite qu'une information de position du deuxième chariot **3.2** soit transmise au premier chariot **3.1** et au récepteur photoélectrique **36.1** fixe, on peut prévoir un codeur de position **16.2** à une ou plusieurs pistes, intégré au deuxième rail de guidage **5.2** et permettant une lecture de position par un capteur **18.2** embarqué sur le deuxième chariot **3.2.** Ce capteur **18.2** est relié à un circuit de conditionnement **20.2** qui fournit une information de position à un circuit de commande **22.2** d'une source lumineuse **24.2** embarquée sur le deuxième chariot **3.2.** Cette source lumineuse **24.2,** en pratique une diode électroluminescente, active la fibre optique photoluminescente **26.2** qui émet une signal lumineux secondaire qui chemine le long de la fibre **26.2** jusqu'à atteindre un récepteur **36.2** embarqué sur le premier chariot **3.1.** Le circuit de commande **22.1** embarqué sur le premier chariot **3.1** reçoit des informations de position à la fois du circuit de détection **38.2** relié au récepteur **36.2** et du circuit de conditionnement **20.1** relié au capteur **18.1** embarqué sur le premier chariot pour lire le codeur **16.1** cheminant le long du premier rail de guidage **5.1.** Le circuit de commande **22.1** génère alors un signal de commande de la source lumineuse **24.1** embarquée par le premier chariot, qui permet de transmettre successivement en les identifiant de manière unique à la fois une information sur la position du deuxième chariot et une information sur la position du premier chariot. Le source lumineuse **24.1** active la fibre optique photoluminescente **26.1** qui émet une signal lumineux secondaire qui chemine le long de la fibre **26.1** jusqu'à atteindre le récepteur fixe **36.1.**

L'alimentation électrique des circuits électroniques **20.2, 22.2** embarqués sur le deuxième chariot, qui n'a pas été représentée sur la figure **16****,** est réalisée par l'intermédiaire du premier chariot. Une partie de l'énergie collectée par le module d'alimentation **52.1** du premier chariot suivant l'une des méthodes décrites précédemment, par exemple par induction avec un circuit inducteur **48.1** ou par contacts électriques, est dérivée pour alimenter le deuxième chariot **3.2** également suivant l'une des méthodes décrite précédemment, par exemple par l'intermédiaire d'un circuit inducteur **48.2.** Le deuxième chariot **3.2** embarque à cet effet un module d'alimentation électrique **52.2** qui collecte cette énergie et alimente les circuits **20.2, 22.2.**

On a illustré plus précisément sur la figure **17** le circuit électronique **53.1** embarqué par le premier chariot **3.1,** et notamment les têtes de lecture **181.1, 182.1** lisant les deux pistes **161.1, 162.1** du codeur **16.1** associé au premier rail de guidage **5.1,** le circuit de conditionnement **201.1** des signaux des têtes de lecture **181.1, 182.1,** et le microcontrôleur **202.1** intégrés au circuit de conditionnement **20.1.** Les signaux en provenance du microcontrôleur **202.1** et du circuit de détection **38.2** relié à la cellule photoélectrique **36.2** également embarquée sur le premier chariot **3.1** sont délivrés au microcontrôleur **222.1** du circuit de commande **22.1** qui pilote la diode électroluminescente **24.1** par l'intermédiaire du bus 204.1 et du pilote **221.1.** On a également précisé sur la figure **17** le cheminement de l'énergie électrique d'alimentation depuis une source d'alimentation fixe **49.1** alimentant un enroulement primaire **48.1** associé au premier rail de guidage **5.1** jusqu'à l'enroulement secondaire **50.1** embarqué sur le premier chariot et relié à un circuit redresseur **52.1** qui alimente à la fois les circuit de conditionnement **20.1** et de commande **22.1** embarqués par le premier chariot **3.1** et un circuit oscillant **49.2** qui alimente un enroulement primaire **48.2** associé au deuxième rail de guidage **5.2,** pour alimenter par induction le circuit d'alimentation **52.2** embarqué sur le deuxième chariot **3.2.** Les têtes de lecture **181.1, 182.1** associées au premier chariot **3.1** ainsi que celles associés au deuxième chariot **3.2,** sont de préférence des éléments magnétorésitants à effet tunnel.

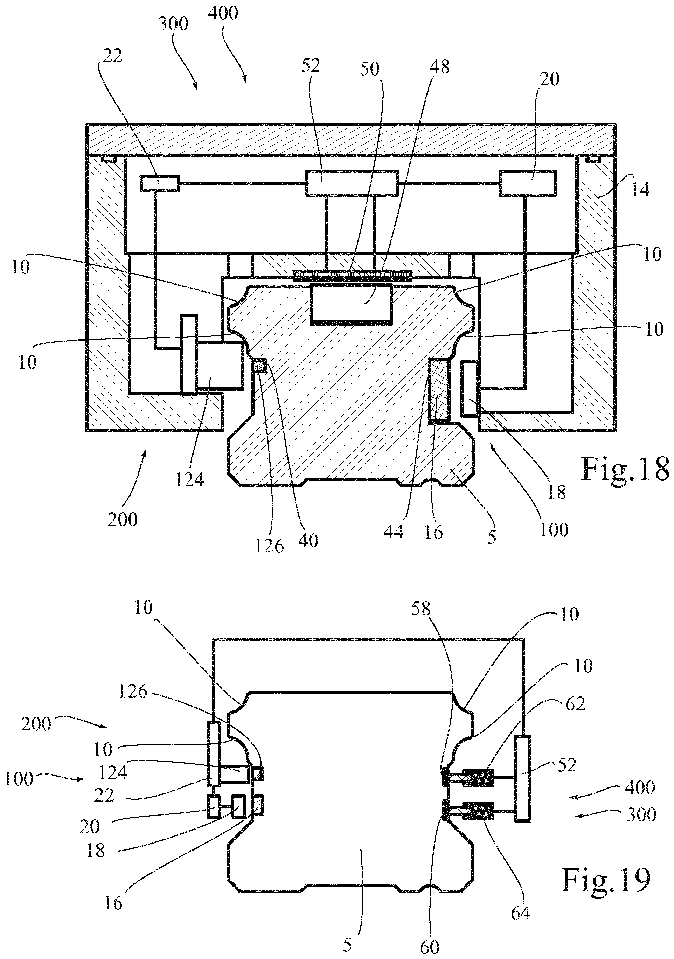

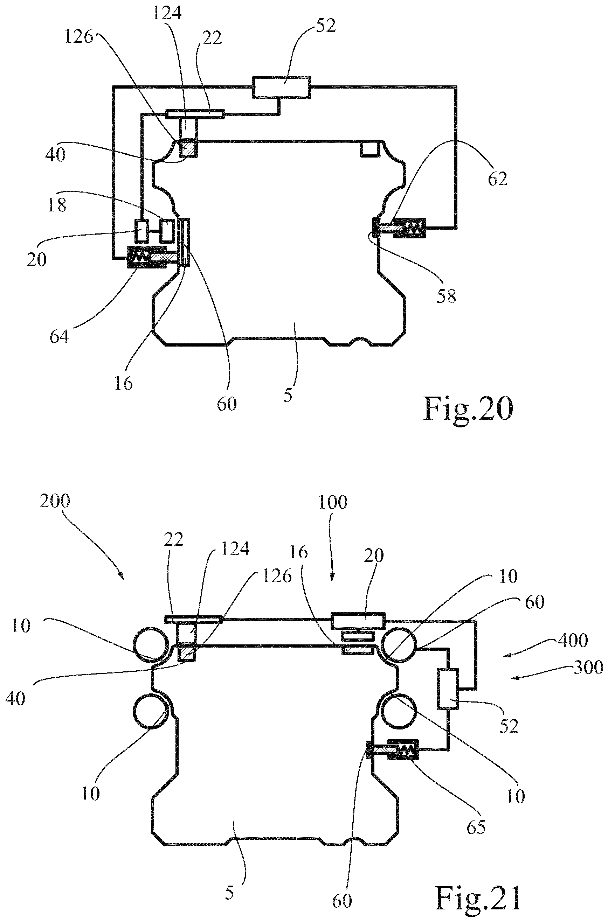

Comme il va maintenant être illustré par les figures **18** à **21****,** l'architecture de la voie de guidage selon l'invention est également applicable en remplaçant la diode électroluminescente **24** par une un autre type d'émetteur de signal descendant **124,** et la fibre photoluminescente **26** par un autre type de support de réception d'information descendante **126.** On peut notamment envisager comme support de réception d'information descendante **126** positionnée le long de la trajectoire définie par le rail de guidage **5** un enroulement inducteur primaire, qui induit un courant dans un enroulement secondaire induit embarqué sur le chariot **3.** L'enroulement secondaire **124** est placé dans un circuit induit présentant une charge variable commandée par le circuit électronique. La charge variable du circuit induit secondaire produit des variations d'impédances dans le circuit primaire **126,** qui sont elles-mêmes mesurables. On peut ainsi transférer de l'information depuis le circuit électronique **22** relié à l'enroulement secondaire **124** au circuit primaire stationnaire **126.** Alternativement, on peut envisager un support de réception d'information **126** descendante constitué par une antenne disposée sur le rail de guidage, le long de la trajectoire de la voie, par exemple dans une rainure prévue à cet effet, et excité par une antenne située à faible distance sur le chariot **3,** l'antenne constituant l'émetteur de signal descendant. L'antenne réceptrice **126** constitue un guide d'onde vers un récepteur pour un signal émis par l'antenne émettrice **124.**

On a illustré sur la figure **18** un mode de réalisation très similaire au mode de réalisation de la figure **2****,** qui n'en diffère que par le remplacement de la fibre photoluminescente **26** par un autre support de réception d'information descendante **126** tel que discuté précédemment, et par le remplacement de la diode électroluminescente **24** par un autre type d'émetteur associé au support de réception **126.** Le récepteur d'information descendante **126** est logé dans une gorge **40** et s'étend sur toute la longueur utile du rail de guidage, de façon à toujours être à distance d'entrefer de l'émetteur **124** solidaire du chariot **3.**

De manière analogue, les figures **19****,** **20** et **21** illustrent des variantes des modes de réalisation des figures **4, 5** et **6****,** respectivement, dans lesquelles la fibre photoluminescente **26** a été remplacée par un autre support de réception d'information descendante **126,** et la diode électroluminescente **24** par un autre type d'émetteur associé au support de réception **126.**

Naturellement, diverses variations sont possibles. La voie de guidage **7** peut être rectiligne ou curviligne pour autant qu'elle définisse un degré de liberté unique. Elle peut être réalisée matériellement par un rail de guidage unique en une ou plusieurs sections, ou par plusieurs rails de guidage parallèles, dont au moins un est instrumenté. On peut le cas échéant prévoir plusieurs rails de guidage parallèles instrumentés, pour assurer une redondance des informations transmises. Le guidage de l'équipage mobile **3, 3.1, 3.2** peut être effectué par roulement, par glissement sec ou lubrifié ou par sustentation pneumatique ou magnétique. L'entraînement de l'équipage mobile **3, 3.1, 3.2** peut être obtenu par tout moyen approprié, et notamment par un mécanisme à écrou et vis sans fin, avec ou sans recirculation de billes. L'équipage mobile **3** peut également être sans moyen d'entraînement, donc libre dans son mouvement par rapport à la voie de guidage. Le nombre d'axes peut être augmenté au-delà de deux. L'alimentation électrique des circuits embarqués sur le ou les équipages mobiles, ou de certains d'entre eux au moins, peut être réalisée par une source électrochimique embarquée, rechargeable ou non, ou par une source photovoltaïque. Dans une telle hypothèse, on peut omettre complètement le circuit inducteur **48** et l'enroulement induit **50** de la figure **3****,** ou les contacts **58, 60** des figures **4** à **6****.** Alternativement, on peut conserver ces éléments, mais uniquement pour leur fonction de transmission d'information montante.

D'une manière générale, les caractéristiques décrites en relation avec un mode de réalisation peuvent être transposées à d'autres modes de réalisation. Ainsi, l'homme du métier pourra notamment combiner l'un quelconque des modes de réalisation de la source lumineuse **24** illustré sur les figures **11** et **12** avec l'un quelconque des modes d'intégration de la fibre optique **26** au rail de guidage **5** illustrés sur les figures **13** à **15** et avec l'un quelconque des modes d'alimentation électrique illustrés sur les figures **1** à **6****,** pour réaliser des variantes de l'installation à un ou plusieurs axes.

Il est à noter par ailleurs que les modes d'alimentation électrique illustrés sur les figures **1** à **6** sont utilisables pour alimenter tout type de circuit électrique ou électronique embarqué sur un chariot mobile le long d'un rail de guidage, indépendamment des modalités choisies pour une transmission d'information entre ce chariot mobile et un récepteur distant, voire indépendamment de l'existence d'une telle transmission.

## Revendications

1. Installation de guidage linéaire instrumentée (1) comportant un rail de guidage (5, 5.1, 5.2) sur lequel sont formées au moins deux pistes de guidage (10), au moins un équipage mobile (3, 3.1, 3.2) guidé sur les pistes de guidage (10) du rail de guidage (5, 5.1, 5.2) par contact roulant ou glissant le long d'une trajectoire prédéterminée fixe par rapport au rail de guidage (5, 5.1, 5.2), l'équipage mobile (3, 3.1, 3.2) comportant un circuit électronique (53, 53.1), l'installation (1) comportant au moins deux des quatre dispositifs d'instrumentation suivants, comportant chacun une partie stationnaire solidaire du rail de guidage (5, 5.1, 5.2) et une partie mobile solidaire de l'équipage mobile (3, 3.1, 3.2) :
- un dispositif d'alimentation en énergie (300) du circuit électronique (53, 53.1), incluant un distributeur d'énergie (48, 48.1, 48.2) solidaire du rail de guidage (5, 5.1, 5.2) et un collecteur d'énergie (50) solidaire de l'équipage mobile (3), apte à collecter de l'énergie mise à disposition par le distributeur d'énergie (48, 48.1, 48.2) pour alimenter le circuit électronique (53, 53.1);
- un dispositif indicateur de position (100) incluant un codeur de position linéaire (16, 16.1, 16.2) solidaire du rail de guidage (5, 5.1, 5.2) longeant la trajectoire de l'équipage mobile (3, 3.1, 3.1), et au moins un capteur de position (18, 18.1, 18.2) solidaire de l'équipage mobile (3, 3.1, 3.2), relié au circuit électronique (53, 53.1) et lisant au moins une information sur le codeur de position linéaire (16, 16.1, 16.2);
- un dispositif de transmission d'informations descendantes (200) comportant un émetteur descendant (24, 24.1, 24.2) solidaire de l'équipage mobile et relié au circuit électronique (53, 53.1), apte à coopérer avec un support linéaire de réception descendante (26, 26.1, 26.2) solidaire du rail de guidage (5, 5.1, 5.2), positionné le long de la trajectoire;
- un dispositif de transmission d'informations montantes (400) comportant un support linéaire d'émission montante (48, 48.1, 48.2) solidaire du rail de guidage (5, 5.1, 5.2), positionné le long de la trajectoire, apte à coopérer avec un récepteur montant (50, 50.1) solidaire de l'équipage mobile (3) et relié au circuit électronique (53, 53.1).
l'installation de guidage linéaire instrumentée (1) comportant au moins le dispositif indicateur de position (100) et le dispositif de transmission d'informations descendantes (200), le support linéaire de réception descendante (26, 26.1, 26.2) étant disposé dans une gorge (40) du rail de guidage (5, 5.1, 5.2).

2. Installation selon la revendication 1, **caractérisé en ce que** le rail de guidage (5, 5.1, 5.2) présente quatre faces principales (5S, 5I, 5G, 5D), incluant une face supérieure (5S) et une face inférieure (5I) opposées, et deux faces latérales (5G, 5D) opposées et s'étendant chacune entre la face supérieure (5S) et la face inférieure (5I), la partie stationnaire d'un premier des au moins deux dispositifs d'instrumentation étant positionnée sur une première des quatre faces principales, la partie stationnaire d'un autre des au moins deux dispositifs d'instrumentation étant positionnée sur une autre des quatre faces principales.

3. Installation selon la revendication 2, **caractérisée en ce que** l'installation comporte au moins un troisième des au moins deux dispositifs d'instrumentation, disposé sur la première ou la deuxième des quatre faces principales (5S, 5I, 5G, 5D).

4. Installation selon la revendication 2, **caractérisée en ce que** l'installation comporte au moins un troisième des au moins deux dispositifs d'instrumentation, disposé sur une troisième des quatre faces principales (5S, 5I, 5G, 5D), distincte de la première et de la deuxième des quatre faces principales (5S, 5I, 5G, 5D).

5. Installation selon l'une quelconque des revendications 2 à 4, **caractérisée en ce que** la première des quatre faces principales (5S, 5I, 5G, 5D) et la deuxième des quatre faces principales (5S, 5I, 5G, 5D) incluent une des faces latérales (5G, 5D) et une des faces supérieure et inférieure (5S, 5I).

6. Installation selon l'une quelconque des revendications 2 à 5, **caractérisé en ce que** les au moins deux pistes de guidages (10) comprennent au moins une piste de guidage localisées au niveau d'une arête entre au moins une des faces latérales (5G, 5D) et au moins une des faces supérieure et inférieure (5S, 5I).

7. Installation selon l'une quelconque des revendications précédentes, **caractérisée en ce que** l'équipage mobile (3) est entraîné par un dispositif d'entraînement de l'installation (11).

8. Installation selon l'une quelconque des revendications précédentes, **caractérisée en ce que** le circuit électronique (53, 53.1) comporte un module de positionnement (20, 20.1, 20.2) pour lire un signal de position généré par le capteur de position (18, 18.1, 18.2) et un module de commande (22, 22.1, 22.2) pour commander l'émetteur descendant de manière à émettre un signal descendant contenant une information de position fonction du signal de position.

9. Installation selon l'une quelconque des revendications précédentes, **caractérisée en ce que** l'installation comporte le dispositif d'alimentation en énergie (300) et **en ce que** le distributeur d'énergie comporte au moins deux pistes d'alimentation électrique (58, 60) disposée le long du rail de guidage (5, 5.1, 5.2) et **en ce que** le collecteur d'énergie comporte au moins deux contacts électriques mobiles d'alimentation (62, 64), reliés chacun électriquement au circuit électronique (53, 53.1) et assurant chacun un contact électrique avec une des pistes d'alimentation électrique.

10. Installation selon la revendication 9, **caractérisée en ce que** l'installation comporte le dispositif d'alimentation électrique et **en ce que** le codeur (16, 16.1, 16.2) est constitué par un codeur magnétique recouvert par une bande métallique de protection constituant une des pistes d'alimentation électrique (60) du distributeur d'énergie.

11. Installation selon l'une quelconque des revendications 9 ou 10, **caractérisée en ce qu'**au moins une des pistes d'alimentation électrique (58, 60) du distributeur d'énergie est constituée par une surface du rail de guidage.

12. Installation selon l'une quelconque des revendications précédentes, **caractérisée en ce que** le rail de guidage (5, 5.1, 5.2) est équipé d'au moins un enroulement primaire (48, 48.1, 48.2) d'alimentation électrique disposé de manière à induire un courant électrique dans au moins un enroulement secondaire (50, 50.1,) disposé sur l'équipage mobile (3, 3.1, 3.2) et relié au circuit électronique (53, 53.1).

13. Installation selon l'une quelconque des revendications précédentes **caractérisée en ce que** le support linéaire de réception descendante (26, 26.1, 26.2) est recouvert d'une couche de résine (42).

14. Installation selon l'une quelconque des revendications précédentes, **caractérisée en ce que** l'équipage mobile (3, 3.1, 3.2) est pourvu d'au moins un système (30) de nettoyage du support linéaire de réception descendante (26, 26.1, 26.2).

15. Installation selon l'une quelconque des revendications précédentes, **caractérisée en ce que** l'émetteur descendant (24, 24.1, 24.2) est monté en surface d'une plaque de circuit imprimé du circuit électronique (53, 53.1) ou traversant une plaque de circuit imprimé du circuit électronique (53, 53.1).

16. Installation selon l'une quelconque des revendications précédentes, **caractérisée** en que l'émetteur descendant (24, 24.1, 24.2) est positionné latéralement à distance du support linéaire de réception descendante (26, 26.1, 26.2).

17. Installation selon l'une quelconque des revendications précédentes, **caractérisé en ce que** le support linéaire de réception descendante comporte une fibre optique photoluminescente (26) positionnée le long de la trajectoire, l'émetteur descendant comportant une source lumineuse d'excitation (24) solidaire de l'équipage mobile (3) pour illuminer transversalement la fibre optique photoluminescente (26), le dispositif de transmission d'informations descendantes comportant en outre au moins une cellule photosensible (36) formant le récepteur et située à au moins une extrémité (34) de la fibre optique (26).

## Patentansprüche

1. Mit Instrumenten ausgestattete Linearführungsanlage (1), welche eine Führungsschiene (5, 5.1., 5.2) mit mindestens zwei Führungsbahnen (10), mindestens einen beweglichen Schlitten (3, 3.1, 3.2), der auf den Führungsbahnen (10) der Führungsschiene (5, 5.1, 5.2) über rollenden oder gleitenden Kontakt entlang einer relativ zur Führungsschiene (5, 5.1, 5.2) feststehenden Bahn geführt wird aufweist, wobei der bewegliche Schlitten (3, 3.1, 3.2) mit einer elektronischen Schaltung (53, 53.1) versehen ist, wobei die Anlage (1) mindestens zwei der vier folgenden Instrumentierungsvorrichtungen enthält, von denen jede einen stationären Teil aufweist, der fest mit der Führungsschiene verbunden ist (5, 5.1, 5.2), und einen beweglichen Teil, der fest mit dem beweglichen Schlitten (3, 3.1, 3.2) verbunden ist:
- eine Energieversorgungsvorrichtung (300) für die elektronische Schaltung (53, 53.1), welche einen Energieverteiler (48, 48.1, 48.2) beinhaltet, der fest mit der Führungsschiene (5, 5.1, 5.2) verbunden ist, und einen Energiesammler (50), der fest mit dem beweglichen Schlitten (3) verbunden ist und in der Lage ist, die über den Energieverteiler (48, 48.1, 48.2) bereitgestellte Energie zu sammeln und damit die elektronische Schaltung (53, 53.1) zu versorgen;
- eine Vorrichtung zur Positionsanzeige (100), die einen linearem Positionscodierer (16, 16.1., 16,2) enthält, der fest mit der Führungsschiene (5, 5.1, 5.2) entlang der Bahn des beweglichen Schlittens (3, 3.1, 3.1) verbunden ist, und mindestens einen fest mit dem beweglichen Schlitten (3, 3.1, 3.2) verbundenen Positionssensor (18, 18.1, 18.2), der an die elektronische Schaltung (53, 53.1) angeschlossen ist und auf dem linearen Positionscodierer (16 ,16.1, 16.2) mindestens eine Information liest;
- eine Übertragungsvorrichtung für Abwärtsdatenstrom-Informationen (200), welche einen Sender von Abwärtsdatenstrom-Informationen (24, 24.1, 24.2) umfasst, der fest mit dem beweglichen Schlitten verbunden und an die elektronische Schaltung (53, 53.1) angeschlossen ist, die in der Lage ist, mit einem entlang der Bahn positionierten Linearträger für dem Empfang von Abwärtsdatenstrom-Informationen (26, 26.1, 26.2), welcher fest mit der Führungsschiene (5, 5.1, 5.2) verbunden ist, zusammen zu wirken;
- eine Übertragungsvorrichtung für Aufwärtsdatenstrom-Informationen (400), welche einen Linearträger zum Senden von Aufwärtsdatenstrom-Informationen (48, 48.1, 48.2) enthält, der fest mit der entlang der Bahn positionierten Führungsschiene (5, 5.1, 5.2) verbunden ist, und in der Lage ist, mit einem Empfänger von Aufwärtsdatenstrom-Informationen (50, 50.1), der fest mit dem beweglichen Schlitten (3) verbunden und an die elektronische Schaltung (53,53.1) angeschlossen ist, zusammen zu wirken,
wobei die mit Instrumenten ausgestattete Linearführungsanlage (1) mindestens die Positionsanzeigevorrichtung (100) und die Übertragungsvorrichtung für Abwärtsdatenstrom-Informationen (200) umfasst, wobei der Linearträger für den Empfang von Abwärtsdatenstrom-Informationen (26, 26.1, 26.2) in einer Nut (40) der Führungsschiene (5, 5.1, 5.2) angeordnet ist.

2. Anlage nach Anspruch 1, **dadurch gekennzeichnet, dass** die Führungsschiene (5, 5.1, 5.2) vier Hauptflächen (5S, 5I, 5G, 5D) aufweist, welche eine obere Fläche (5S) und eine gegenüberliegende untere Fläche (5I) umfassen, und zwei gegenüberliegende seitliche Flächen (5G, 5D), die sich jeweils zwischen der oberen Fläche (5S) und der unteren Fläche (5I) erstrecken, wobei der stationäre Teil einer ersten der mindestens zwei Instrumentierungsvorrichtungen auf einer ersten der vier Hauptflächen positioniert ist, und der stationäre Teil einer anderen der mindestens zwei Instrumentierungsvorrichtungen auf einer anderen der vier Hauptflächen positioniert ist.

3. Anlage nach Anspruch 2, **dadurch gekennzeichnet, dass** sie mindestens eine dritte der mindestens zwei Instrumentierungsvorrichtungen umfasst, die auf der ersten oder der zweiten der vier Hauptflächen (5S, 5I, 5G, 5D) angeordnet ist.

4. Anlage nach Anspruch 2, **dadurch gekennzeichnet, dass** sie mindestens eine dritte der mindestens zwei Instrumentierungsvorrichtungen umfasst, die auf einer dritten der vier Hauptflächen (5S, 5I, 5G, 5D) angeordnet ist, und von der ersten und der zweiten der vier Hauptflächen (5S, 5I, 5G, 5D) abweicht.

5. Anlage nach einem der Ansprüche 2 bis 4, **dadurch gekennzeichnet, dass** die erste der vier Hauptflächen (5S, 5I, 5G, 5D) und die zweite der vier Hauptflächen (5S, 5I, 5G, 5D) eine der seitlichen Flächen (5G, 5D) und eine der oberen und unteren Flächen (5S, 5I) beinhalten.

6. Anlage nach einem der Ansprüche 2 bis 5, **dadurch gekennzeichnet, dass** mindestens zwei Führungsbahnen (10) mindestens eine Führungsbahn umfassen, die sich an einer Kante zwischen mindestens einer der seitlichen Flächen (5G, 5D) und mindestens einer der oberen und unteren Flächen (5S, 5I) befindet.

7. Anlage nach einem der vorhergehenden Ansprüche, **dadurch gekennzeichnet, dass** der bewegliche Schlitten (3) über eine Antriebseinheit der Anlage (11) angetrieben wird.

8. Anlage nach einem der vorhergehenden Ansprüche, **dadurch gekennzeichnet, dass** die elektronische Schaltung (53, 53.1) ein Positionierungsmodul (20, 20.1, 20.2) enthält, um ein vom Positionssensor (18, 18.1, 18.2) generiertes Positionssignal zu lesen, und ein Steuermodul (22, 22.1, 22.2), um den Sender der Abwärtsdatenstrom-Informationen so zu steuern, dass er ein Abwärts-Signal mit einer vom Positionssignal abhängenden Positionsinformation sendet.

9. Anlage nach einem der vorhergehenden Ansprüche, **dadurch gekennzeichnet, dass** sie die Energieversorgungsvorrichtung (300) umfasst, und dass der Energieverteiler mindestens zwei, entlang der Führungsschiene (5, 5.1, 5.2) angeordnete Stromversorgungsbahnen (58, 60) enthält, und dadurch, dass der Energiesammler mindestens zwei bewegliche Stromversorgungskontakte (62, 64) aufweist, die jeweils elektrisch mit der elektronischen Schaltung (53, 53.1) verbunden sind und jeweils den elektrischen Kontakt zu einer der Stromversorgungsbahnen herstellen.

10. Anlage nach Anspruch 9, **dadurch gekennzeichnet, dass** sie die Stromversorgungsvorrichtung umfasst, und dadurch, dass der Codierer (16, 16.1, 16.2) ein magnetischer Codierer ist, der mit einem metallischen Schutzband bedeckt ist, welches eine der Stromversorgungsbahnen (60) des Energieverteilers bildet.

11. Anlage nach einem der Ansprüche 9 oder 10, **dadurch gekennzeichnet, dass** mindestens eine der Stromversorgungsbahnen (58, 60) des Energieverteilers durch eine Oberfläche der Führungsschiene gebildet wird.

12. Anlage nach einem der vorhergehenden Ansprüche, **dadurch gekennzeichnet, dass** die Führungsschiene (5, 5.1, 5.2) mit mindestens einer Primärwicklung (48, 48.1, 48.2) für die Stromversorgung versehen ist, die so angeordnet ist, dass in mindestens einer auf dem beweglichen Schlitten (3, 3.1, 3.2) angeordneten und mit der elektronischen Schaltung (53, 53.1) verbundenen Sekundärwicklung (50, 50.1) ein elektrischer Strom induziert wird.

13. Anlage nach einem der vorhergehenden Ansprüche, **dadurch gekennzeichnet, dass** der Linearträger für den Empfang der Abwärtsdatenstrom-Informationen (26, 26.1, 26.2) mit einer Harzschicht (42) bedeckt ist.

14. Anlage nach einem der vorhergehenden Ansprüche, **dadurch gekennzeichnet, dass** der bewegliche Schlitten (3, 3.1, 3.2) mit mindestens einem System (30) zur Reinigung des Linearträgers für den Empfang der Abwärtsdatenstrom-Informationen (26, 26.1, 26.2) versehen ist.

15. Anlage nach einem der vorhergehenden Ansprüche, **dadurch gekennzeichnet, dass** der Sender der Abwärtsdatenstrom-Informationen (24, 24.1, 24.2) an der Oberfläche einer Leiterplatte der elektronischen Schaltung (53, 53.1) montiert ist oder durch eine Leiterplatte der elektronischen Schaltung (53, 53.1) geführt wird.

16. Anlage nach einem der vorhergehenden Ansprüche, **dadurch gekennzeichnet, dass** der Sender der Abwärtsdatenstrom-Informationen (24, 24.1, 24.2) seitlich des Linearträgers für den Empfang der Abwärtsdatenstrom-Informationen (26, 26.1, 26.2) positioniert ist.

17. Anlage nach einem der vorhergehenden Ansprüche, **dadurch gekennzeichnet, dass** der Linearträger für den Empfang der Abwärtsdatenstrom-Informationen eine entlang der Bahn positionierte fotolumineszierende Lichtleitfaser (26) enthält, wobei der Sender der Abwärtsdatenstrom-Informationen eine mit dem beweglichen Schlitten (3) fest verbundene erregende Lichtquelle (24) enthält, um die photolumineszierende Lichtleitfaser (26) querverlaufend zu erleuchten, wobei die Vorrichtung zur Übertragung der Abwärtsdatenstrom-Informationen des Weiteren mindestens einen Lichtsensor (36) umfasst, der den Empfänger bildet und sich an mindestens einem Ende (34) der Lichtleitfaser (26) befindet.

## Claims

1. An instrumented linear guiding device (1) comprising a guide rail (5, 5.1, 5.2) on which are formed at least two guide tracks (10), at least one mobile element (3, 3.1, 3.2) guided on the guide tracks (10) of the guide rail (5, 5.1, 5.2) by rolling contact or sliding contact along a predetermined path stationary relative to the guide rail (5, 5.1, 5.2), with the mobile element (3, 3.1, 3.2) comprising an electronic circuit (53, 53.1), with the device (1) comprising at least two of the four following instrumentation devices, each having a stationary portion secured to the guide rail (5, 5.1 , 5.2) and a mobile part secured to the mobile element (3, 3.1, 3.2):
- a device (300) supplying energy to the electronic circuit (53, 53.1) including an energy distributor (48, 48.1, 48.2) secured to the guide rail (5, 5.1, 5.2) and an energy collector (50) secured to the mobile element (3), adapted to collect energy made available by the energy distributor (48, 48.1, 48.2) for supplying energy to the electronic circuit (53, 53.1);
- a position indicator device (100) including a linear position encoder (16, 16.1, 16.2) secured to the guide rail (5, 5.1, 5.2) along the path of the mobile element (3, 3.1, 3.1), and at least one position sensor (18, 18.1, 18.2) secured to the mobile element (3, 3.1, 3.2) connected to the electronic circuit (53, 53.1) and reading at least one piece of information on the linear position encoder (16, 16.1, 16.2);
- a downlink information transmission device (200) having a downlink transmitter (24, 24.1, 24.2) secured to the mobile element and connected to the electronic circuit (53, 53.1), capable of cooperating with a linear downlink reception medium (26, 26.1, 26.2) secured to the guide rail (5, 5.1, 5.2), positioned along the path;
- an uplink information transmission device (400) comprising a linear uplink transmission medium (48, 48.1, 48.2) secured to the guide rail (5, 5.1, 5.2), positioned along the path, capable of cooperating with an uplink receiver (50, 50.1) secured to the mobile element (3) and connected to the electronic circuit (53, 53.1),
with the instrumented linear guiding device (1) comprising at least the position indicator device (100) and the downlink information transmission device (200), with the linear downlink reception medium (26, 26.1, 26.2) being positioned in a groove (40) of the guide rail (5, 5.1, 5.2) .

2. An instrumented device according to claim 1, **characterized in that** the guide rail (5, 5.1, 5.2) has four main faces (5S, 51, 5G, 5D), including an upper face (5S) and a lower opposite face (51) and two opposite side faces (5G, 5D) and each extending between the upper face (5S) and the lower face (51), with the stationary part of a first one of the at least two instrumentation devices being positioned on a first one of the four main faces, with the stationary part of another one of the at least two instrumentation devices being positioned on another one of the four main faces.

3. An instrumented device according to claim 2, **characterized in that** the instrumented device comprises at least a third one of the at least two instrumentation devices, positioned on the first one or the second one of the four main faces (5S, 51, 5G, 5D).

4. An instrumented device according to claim 2, **characterized in that** the instrumented device comprises at least a third one of the at least two instrumentation devices, positioned on a third one of the four main faces (5S, 51, 5G, 5D), different from the first one and the second one of the four main faces (5S, 51, 5G, 5D).

5. An instrumented device according to any one of claims 2 to 4, **characterized in that** the first one of the four main faces (5S, 51, 5G, 5D) and the second one of the four main faces (5S, 51, 5G, 5D) include one of the side faces (5G, 5D) and one of the upper and lower faces (5S, 51) .

6. An instrumented device according to any one of claims 2 to 5, **characterized in that** the at least two guide tracks (10) comprise at least one guide track located at one edge between at least one of the side faces (5G, 5D) and at least one of the upper and lower faces (5S, 51).

7. An instrumented device according to any one of the preceding claims, **characterized in that** the mobile element (3) is driven by a device for driving the instrumented device (11).

8. An instrumented device according to any one of the preceding claims, **characterized in that** the electronic circuit (53, 53.1) comprises a positioning module (20, 20.1, 20.2) for reading a position signal generated by the position sensor (18, 18.1, 18.2) and a control module (22, 22.1, 22.2) for controlling the downlink transmitter so as to transmit a downlink signal containing a piece of position information based on the position signal.

9. An instrumented device according to any one of the preceding claims, **characterized in that** the instrumented device comprises the energy supply device (300) and **in that** the energy distributor comprises at least two electric energy supply tracks (58, 60) positioned along the guide rail (5, 5.1, 5.2), and **in that** the energy collector comprises at least two mobile electric energy supply contacts (62, 64), with each one being electrically connected to the electronic circuit (53, 53.1) and each one providing an electrical contact with one of the electric energy supply tracks.

10. An instrumented device according to claim 9, **characterized in that** the instrumented device includes the energy supply device and **in that** the encoder (16, 16.1, 16.2) consists of a magnetic encoder covered with a protective metal strip forming one of the energy supply tracks (60) of the energy distributor.

11. An instrumented device according to any one of claims 9 or 10, **characterized in that** at least one of the energy supply tracks (58, 60) of the energy distributor is formed by a surface of the guide rail.

12. An instrumented device according to any one of the preceding claims, **characterized in that** the guide rail (5, 5.1, 5.2) is equipped with at least one energy supply primary winding (48, 48.1, 48.2) so positioned as to induce electric current in at least one secondary winding (50, 50.1) arranged on the mobile element (3, 3.1, 3.2) and connected to the electronic circuit (53, 53.1).

13. An instrumented device according to any one of the preceding claims, **characterized in that** the linear downlink reception medium (26, 26.1, 26.2) is coated with a resin layer (42).

14. An instrumented device according to any one of the preceding claims, **characterized in that** the mobile element (3, 3.1, 3.2) is provided with at least one system (30) for cleaning the linear downlink reception medium (26, 26.1, 26.2).

15. An instrumented device according to any one of the preceding claims, **characterized in that** the downlink transmitter (24, 24.1, 24.2) is mounted on the surface of a printed circuit board of the electronic circuit (53, 53.1) or through a printed circuit board of the electronic circuit (53, 53.1).

16. An instrumented device according to any one of the preceding claims, **characterized in that** the downlink transmitter (24, 24.1, 24.2) is positioned laterally away from the linear downlink reception medium (26, 26.1, 26.2).

17. An instrumented device according to any one of the preceding claims, **characterized in that** the linear downlink reception medium comprises a photoluminescent optical fiber (26) positioned along the path, with the downlink transmitter including an excitation light source (24) secured to the mobile element (3) for transversely illuminating the photoluminescent optical fiber (26), with the downlink information transmission device further comprising at least one photosensitive cell (36) forming the receiver and located at at least one end (34) of the optical fiber (26).
